Europäisches Patentamt

European Patent Office

Office européen des brevets

(19)

(11) Veröffentlichungsnummer : **0 165 443**
**B1**

(12) ## EUROPÄISCHE PATENTSCHRIFT

(45) Veröffentlichungstag der Patentschrift :
02.03.88

(21) Anmeldenummer : 85105732.3

(22) Anmeldetag : 10.05.85

(51) Int. Cl.⁴ : **B 66 B 13/26**, B 66 B 13/08,
E 05 F 15/00

(54) Türantrieb mit Einklemmsicherung für Türen von Aufzugskabinen.

(30) Priorität : 28.05.84 CH 2596/84

(43) Veröffentlichungstag der Anmeldung :
27.12.85 Patentblatt 85/52

(45) Bekanntmachung des Hinweises auf die Patenterteilung : 02.03.88 Patentblatt 88/09

(84) Benannte Vertragsstaaten :
**AT DE FR GB IT**

(56) Entgegenhaltungen :
**DE-A- 2 514 764**
**FR-A- 2 052 208**
**GB-A- 1 549 857**
**GB-A- 2 053 344**
**US-A- 2 225 003**

(73) Patentinhaber : **INVENTIO AG**
**Seestrasse 55**
**CH-6052 Hergiswil NW (CH)**

(72) Erfinder : **Haas, Max**
**Lopperstrasse 8**
**CH-6010 Kriens (CH)**

**Beschreibung**

Die Erfindung betrifft einen Türantrieb mit Einklemmsicherung für horizontal öffnende Türen von Aufzugskabinen mit einem von einem Motor über ein Untersetzungsgetriebe angetriebenes Antriebsmittel mit mindestens einem an einer Tür angeordneten Türmitnehmer, wobei die Einklemmsicherung aus zwei mit Federn belasteten, an je einem zweiarmigen Rollenhebel angelenkten Spannrollen und aus mindestens einem Umschaltkontakt besteht und eine durch das Blockieren der Tür betätigbar Reversierschaltvorrichtung aufweist.

Beim Schliessen derartiger Türen kommt es vor, dass ein Fahrgast oder ein Gegenstand zwischen den Türrahmen und den Türflügel, bzw. zwischen zwei Türflügel gerät, wobei der Türflügel an der Weiterbewegung gehindert wird. Eine entsprechende Reversierschaltvorrichtung verursacht eine sofortige Umkehrung der Türbewegung in die Gegenrichtung und verhindert dadurch ein Einklemmen.

Mit der DE-OS 22 26 326 ist eine derartige Antriebsvorrichtung für eine Aufzugsschiebetür bekanntgeworden, bei welcher die Schiebetür durch ein von einem Elektromotor über eine Seilscheibe angetriebenes, endloses Seil hinund herbewegt wird. Der Elektromotor wird auf dem Kabinendach auf einer Schwinge gelagert. Die Motorschwinge ist zusammen mit dem Motor um eine parallel zur Motorwelle angeordnete Achse begrenzt schwenkbar gelagert und wird durch die Kraft elastischer Mittel in einer Gleichgewichtslage gehalten. Beim Blockieren der Türbewegung, beispielsweise beim Aufhalten der Schiebetür durch einen Fahrgast, werden der Motor mit der Antriebsseilscheibe und die Schwinge durch das vom blockierten Seiltrum auf die Antriebswelle des Motors einwirkende Bremsmoment aus der Gleichgewichtslage geschwenkt und ein Umsteuerkontakt betätigt. Der Elektromotor wird in die umgekehrte Drehrichtung geschaltet, wobei sich die Schiebetür in der entgegengesetzten Richtung bewegt. Ein Nachteil dieser Ausführung liegt darin, dass der auf der Motorschwinge schwenkbar gelagerte Motor auch beim Beschleunigen und beim Verzögern der in Fahrt befindlichen Kabine zusammen mit der Schwinge aus der Gleichgewichtslage bewegt wird, wobei jedesmal Vibrationen und Geräusche auf die Kabine übertragen werden.

Mit der deutschen Offenlegungsschrift Nr. DE-A-2 514 764 ist ein Sicherheitssystem für eine automatisch angetriebene Aufzugstür der eingangs genannten Art bekanntgeworden, bei welchem die durch einen Kurbeltrieb bewegte Tür durch eine an einem Kettentrieb angeordnete Sicherheitseinrichtung überwacht wird. Der Kettentrieb besteht aus einem am Motorwellenende aufgekeilten Kettenrad, einem eine exzentrisch angelenkte Antriebsstange aufweisenden, an der Kabine drehbar gelagerten Antriebsrad und einer die beiden Kettenräder miteinander verbindenden, endlosen Antriebskette. Zwischen den beiden Trums der Antriebskette sind zwei voneinander unabhängige, einander gegenüberliegende, schwenkbar gelagerte Druckrollen angeordnet, welche durch die Kraft je einer Feder an die Kette gedrückt werden, und so die Kettentrums auseinander drücken. Beim Blockieren eines Türflügels wird der entsprechende Trum der Antriebskette durch den Motor weitergespannt, bis die Druckrolle nach Innen schwenkt und ein Umschaltkontakt betätigt wird, welcher die Bewegungsrichtung des Türflügels umkehrt. Der Türflügel wird über ein zusätzliches Gestänge von der am Kettenrad exzentrisch angelenkten Antriebsstange angetrieben, wobei der Türflügel beim Offnen oder beim Schliessen gleichmässig beschleunigt und verzögert wird.

Ein Nachteil dieser Sicherheitseinrichtung liegt darin, dass die Blockierung eines Türflügels sich über ein mehrteiliges Gestänge auf die am Kettenrad exzentrisch angelenkte Antriebsstange und auf das Antriebsrad und erst dann auf die Antriebskette auswirkt, welche dann durch die Zunahme der Kettenspannung die entsprechende Spannrolle schwenkt und den Umschaltkontakt betätigt. Dadurch wird die Ansprechzeit für die Umschaltung der Bewegung bei einer Einklemmgefahr erheblich verzögert.

Ein weiterer Nachteil liegt auch darin, dass mit der in Fig. 7 gezeigten Anordnung des Sicherheitssystems relativ grosse Achsabstände zwischen dem Kettenrad 214 und dem Antriebsrad 224 erforderlich sind, um einen genügend grossen Umschlingungswinkel am Kettenrad 214 zu erhalten, wodurch aber eine kompakte Bauweise für den Türantrieb nicht möglich ist.

Der Erfindung liegt die Aufgabe zugrunde, einen für die Offnungs- und Schliessbewegung von Aufzugstüren einsetzbaren Türantrieb vorzuschlagen, bei welchem eine an der freien Schliessbewegung gehinderte Aufzugstür mit möglichst geringer Verzögerung reversierbar ist, und welcher eine kompakte Bauweise ermöglicht.

Diese Aufgabe wird durch die im ersten Anspruch gekennzeichnete Erfindung gelöst.

Die durch die Erfindung erreichten Vorteile sind im wesentlichen darin zu sehen, dass durch die vorgeschlagene Ausführung des Türantriebes eine unmittelbar auf die Umschaltung der Sicherheitseinrichtung wirkende Einklemmsicherung möglich ist, dass eine sinusförmige Anlaufbeschleunigung und eine sinusförmige Auslaufverzögerung des Türflügels erzielt wird, dass keine Schwingungen und Geräusche während der Fahrt auf die Aufzugskabine übertragen werden, dass sich der vorgeschlagene Türantrieb durch seine kompakte Bauweise nicht nur für Neuanlagen, sondern auch für nachträgliche Umbauten eignet, dass für jede gewünschte Türbreite die gleiche Antriebseinheit einsetzbar ist und einzig die Länge des Zahnriemens an die Lage der verschiebbaren Umlenkrolle angepasst werden muss und dass der nicht selbsthemmende Türantrieb es gestattet, die Kabinentür bei Stromausfall von Hand zu öffnen, voräusgesetzt, dass sich die Aufzugskabine im Bereich eines Stockwerkes befindet.

Auf beiliegenden Zeichnungen ist ein Ausführungsbeispiel der Erfindung dargestellt, das im folgenden näher erläutert wird. Es zeigen :

Fig. 1 eine Ansicht des Türantriebes mit Einklemmsicherung mit dem oberen Anschlussteil des Türflügels einer Aufzugskabine,

Fig. 2 schematisch den Türantrieb mit Einklemmsicherung bei der normalen Schliessbewegung,

Fig. 3 schematisch den Türantrieb mit Einklemmsicherung am Ende der Schliessbewegung oder beim Reversieren, wenn die Tür blockiert ist, und

Fig. 4 schematisch den Türantrieb mit Einklemmsicherung bei der Oeffnungsbewegung.

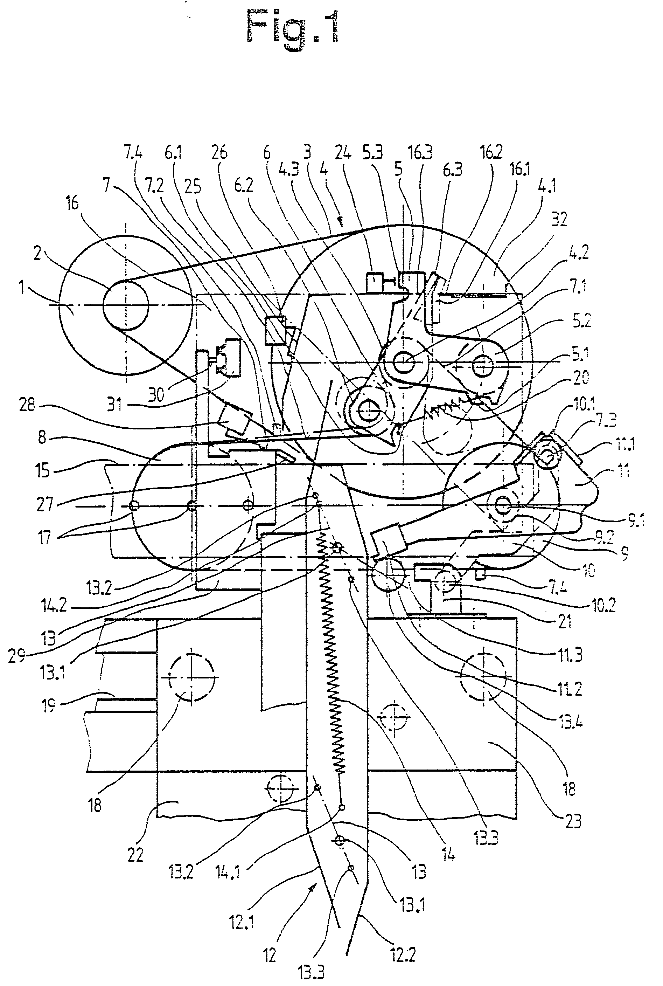

In Fig. 1 ist mit 1 ein Motor für die Türantriebsvorrichtung bezeichnet. Eine Antriebsscheibe 2 des Motors 1 ist mit einem Antriebsriemen 3 mit einem Vorgelege 4 verbunden. Das Vorgelege 4 und der Motor 1 sind auf einem Blechträger 16 fest auf dem Dach der Aufzugskabine aufgebaut. Auf einer Achse 4.2 des Vorgeleges 4 sind eine Riemenscheibe 4.1 und eine Zahnrolle 4.3 drehbar gelagert. Die Zahnrolle 4.3 treibt einen Zahnriemen 7 an, welcher um eine feste Umlenkrolle 9 und um eine verschiebbare Umlenkrolle 8 gelegt ist. Die verschiebbare Umlenkrolle 8 wird je nach der Breite eines Türflügels 22 an einer entsprechenden, in einem Türsupport 15 der Aufzugskabine vorgesehenen Befestigungsstelle 17 drehbar gelagert. Zur Vergrösserung des Umschlingungswinkels des Zahnriemens 7 an der Zahnrolle 4.3 und zum automatischen Spannen des Zahnriemens 7 sind auf beiden Seiten der Zahnrolle 4.3 Spannrollen 5.2, 6.2 angeordnet, welche den Antriebstrum 7.1 und den Rücklauftrum 7.2 des Zahnriemens 7 umlenken. Die eine Spannrolle 6.2 ist an einem Hebelarm eines auf der Achse 4.2 des Vorgeleges 4 schwenkbar gelagerten, als Anschlaghebel 6 bezeichneten, zweiarmigen Rollenhebels drehbar gelagert. Die andere Spannrolle 5.2 ist an einem Hebelarm eines ebenfalls auf der Achse 4.2 des Vorgeleges 4 gelagerten, als Betätigungshebel 5 bezeichneten, zweiarmigen Rollenhebels drehbar gelagert. Der Anschlaghebel 6 und der Betätigungshebel 5 sind durch eine Feder 20 miteinander verbunden. Je ein Ende der Feder 20 ist an einem Spannhaken 5.1 des Betätigungshebels 5 und an einem Spannhaken 6.1 des Anschlaghebels 6 eingehängt. Am anderen Hebelarm des Betätigungshebels 5 ist ein Betätigungsnocken 5.3 angeordnet. Der Betätigungsnocken 5.3 des Betätigungshebels 5 ragt in den Betätigungsbereich eines Umsteuerkontaktes 24 hinein. Die Schwenkbewegung des Betätigungshebels 5 ist in einer Richtung durch einen am Blechträger 16 einstellbar angeordneten Anschlag 32 und in der anderen Richtung durch den zwischen der Zahnrolle 4.3 und der festen Umlenkrolle 9 maximal gespannten Antriebstrum 7.1 des Zahnriemens 7 begrenzt. An einem Hebelarm des Anschlaghebels 6 ist ein Anschlagnocken 6.3 angeordnet. Dieser Anschlagnocken 6.3 ragt durch eine im Blechträger 16 vorgesehene Aussparung 16.1, wobei die Anschläge 16.2, 16.3 der Aussparung 16.1 die Schwenkbewegung des Anschlaghebels 6 in beiden Schwenkrichtungen limitieren. Am Antriebstrum 7.1 des Zahnriemens 7 ist an einem Anschlussgelenk 7.3 ein Mitnehmerbügel 10 angelenkt. Am Mitnehmerbügel 10 ist auf der Achse des Anschlussgelenkes 7.3 zusätzlich eine Mitnehmerrolle 10.1 drehbar gelagert. Das andere Ende des Mitnehmerbügels 10 ist als ein Mitnehmergelenk 10.2 mit einem Türmitnehmer 21 gelenkig verbunden. Der Mitnehmerbügel 10 ist so geformt, dass er, sobald das Anschlussgelenk 7.3 des Zahnriemens 7 die Totpunktlage um ein bestimmtes Mass überschritten hat, an einem Schaft 9.2 einer Drehachse 9.1 der festen Umlenkrolle 9 ansteht. Der Türmitnehmer 21 ist an einem Türaufbau 23 eines Türflügels 22 der Kabinentür befestigt. Am Türaufbau 23 sind auch in einer Führungsschiene 19 laufende Tragrollen 18 angeordnet. Auf der Drehachse 9.1 der Umlenkrolle 9 ist ein Kipphebel 11 schwenkbar gelagert. Ein Hebelarm des Kipphebels 11 ist als Rollenmitnehmer 11.1 für die Mitnehmerrolle 10.1 und der andere Hebelarm als Gegengewicht 11.2 mit einer Führungsfläche 11.3 ausgebildet. Die Führungsfläche 11.3 wirkt mit einer Steuerrolle 13.4 eines mit einem Drehpunkt 13.1 an der Kabinentür schwenkbar gelagerten Doppelhebels 13 zusammen. Am Gelenkpunkt 13.2 des Doppelhebels 13 ist eine obere Kupplungsschiene 12.1 und am Gelenkpunkt 13.3 des Doppelhebels 13 eine untere Kupplungsschiene 12.2 eines Mitnehmerparallelogrammes 12 angelenkt. Eine mit einem ersten Befestigungspunkt 14.1 an der Kabinentür festgemachte Spannfeder 14 ist mit einem zweiten Befestigungspunkt 14.2 am Doppelhebel 13 angelenkt. Durch diese Spannfeder 14 wird das Mitnehmerparallelogramm 12 in der Ruhelage auseinandergespreizt. Am Blechträger 16 ist eine Kontaktfahne 25 angeordnet, welche einen ebenfalls am Blechträger 16 befestigten Endkontakt 26 in einer Ruhelage hält. Für die Betätigung der Kontaktfahne 25 ist am Rücklauftrum 7.2 des Zahnriemens 7 ein Anschlag 7.4 vorgesehen. An einem am Türflügel 22 befestigten Kontaktaufbau 29 sind eine Kontaktbrücke 30 und eine Steuerkurve 27 angeordnet. Die Steuerkurve 27 arbeitet mit zwei an der Kabine nebeneinander vorgesehenen Kontakten 28, wovon der eine ein Endkontakt und der andere ein Ueberbrückungskontakt ist, und die Kontaktbrücke 30 mit einem ebenfalls an der Kabine vorgesehenen Ueberwachungskontakt 31 zusammen.

In den Fig. 2, 3 und 4, welche je eine mögliche Arbeitsstellung des Türantriebes zeigen, sind nur die Hauptteile dargestellt und mit den gleichen Ziffern wie in der Fig. 1 bezeichnet. Das Antriebsmittel 7 wird um die feste Umlenkrolle 9 und die verschiebbare Umlenkrolle 8 gelegt und durch die Treibrolle 4.3 angetrieben. Auf der Achse 4.2 der Treibrolle 4.3 sind der Betätigungshebel 5 und der Anschlaghebel 6 schwenkbar gelagert. An einem Hebelarm des Betätigungshebels 5 ist die Spannrolle 5.2 und am anderen Hebelarm der Betätigungsnocken 5.3 angeordnet. Der Anschlaghebel 6 trägt am einen Hebelarm die Spannrolle 6.2 und am anderen Hebelarm den Anschlagnocken 6.3. Die beiden Spannrollen 5.2, 6.2 werden durch die Feder 20 an den Antriebstrum 7.1 bzw. an den Rücklauftrum 7.2 des Antriebsmittels 7 gedrückt. Der Betätigungsnocken 5.3 des Betätigungshebels 5 arbeitet mit dem Umsteuerkontakt 24 und dem an der Kabine befestigten einstellbaren Anschlag 32 zusammen. Der Schwenkweg des Anschlagnockens 6.3 des Anschlaghebels 6 wird begrenzt durch die beiden fest an der Kabine angeordneten Anschläge 16.2 und 16.3.

Die in Fig. 1 gezeigte Türantriebsvorrichtung ist in der geschlossenen Freigabestellung dargestellt, welche nach Beendigung des Schliessvorganges der Schiebetür erreicht wird. Kurz vor dem Erreichen dieser Freigabestellung, betätigt die am Kontaktaufbau 29 des Türflügels 22 befestigte Steuerkurve 27 die beiden nebeneinander angeordneten Kontakte 28. Daran anschliessend läuft bei kleinster Verschiebung des Türflügels 22 das am Zahnriemen 7 angeordnete Anschlussgelenk 7.3, an welchem der Mitnehmerbügel 10 angelenkt ist über eine Totpunktlage hinaus bis der Mitnehmerbügel 10 am Schaft 9.2 der Drehachse 9.1 der festen Umlenkrolle 9 ansteht. Dabei wird der Zahnriemen 7 durch den unter Spannung stehenden Motor 1 gespannt und in dieser gespannten Lage gehalten. Durch die Mitnehmerrolle 10.1 wird der Kipphebel 11 auf der einen Seite nach oben gedrückt um auf der anderen Seite mit der Führungsfläche 11.3 nach unten auf die Steuerrolle 13.4 zu drücken, wodurch das Mitnehmerparallelogramm 12 gleichzeitig in einer zusammengedrückten Stellung gehalten wird. Ebenso wird die Kontaktbrücke 30 des Kontaktaufbaus 29 des Türflügels 22 an den Ueberwachungskontakt 31 gedrückt, wodurch die Fahrt für die Kabine freigegeben ist.

Nähert sich die Aufzugskabine einer Zieletage, wird die Türantriebsvorrichtung ca. 25 cm vor der Bündigstellung von Kabinen- und Stockwerksboden angetrieben und aus der Totpunktlage geführt. Der Motor 1 treibt dabei über das Vorgelege 4 den Zahnriemen 7 im Uhrzeigersinn an und führt das Anschlussgelenk 7.3 des Zahnriemens 7, an welchem der Mitnehmerbügel 10 angelenkt ist, um die feste Umlenkrolle 9 in die untere, horizontale tangentiale Verbindungsebene zwischen den beiden Umlenkrollen 8, 9, dann der horizontalen Verbindungslinie zwischen den Umlenkrollen 8, 9 entlang, um kurz vor der Beendigung des Oeffnungsvorganges um die Umlenkrolle 8 wieder in eine Totpunktlage geführt zu werden. Bei diesem Oeffnungsvorgang ist der Rücklauftrum 7.2 des Zahnriemens 7 zwischen der Zahnrolle 4.3 und der Umlenkrolle 8 satt gespannt, wobei die Spannrolle 6.2 des Spannhebels 6 eine obere Stellung einnimmt, welche durch den am festen Anschlag 16.2 der Aussparung 16.1 anstehenden Anschlagnocken 6.3 des Spannhebels 6 begrenzt ist. Der Antriebstrum 7.1 des Zahnriemens 7 wird durch die Spannrolle 5.2 zwischen der Zahnrolle 4.3 und der Umlenkrolle 9 nach unten gezogen. Der mit dem Mitnehmerbügel 10 gelenkig verbundene Türmitnehmer 21 öffnet beim oben beschriebenen Vorgang den Türflügel 22, und zwar in der mittleren Oeffnungsphase mit der Geschwindigkeit des Zahnriemens 7, am Anfang der Bewegung mit einer sinusförmigen Beschleunigung und am Ende der Bewegung mit einer sinusförmigen Verzögerung. Das Ende der Bewegung wird dadurch eingeleitet, dass der am Zahnriemen 7 befestigte Anschlag 7.4 die Kontaktfahne 25 verschiebt, bis der Endkontakt 26 anspricht und der Motor 1 abgeschaltet wird.

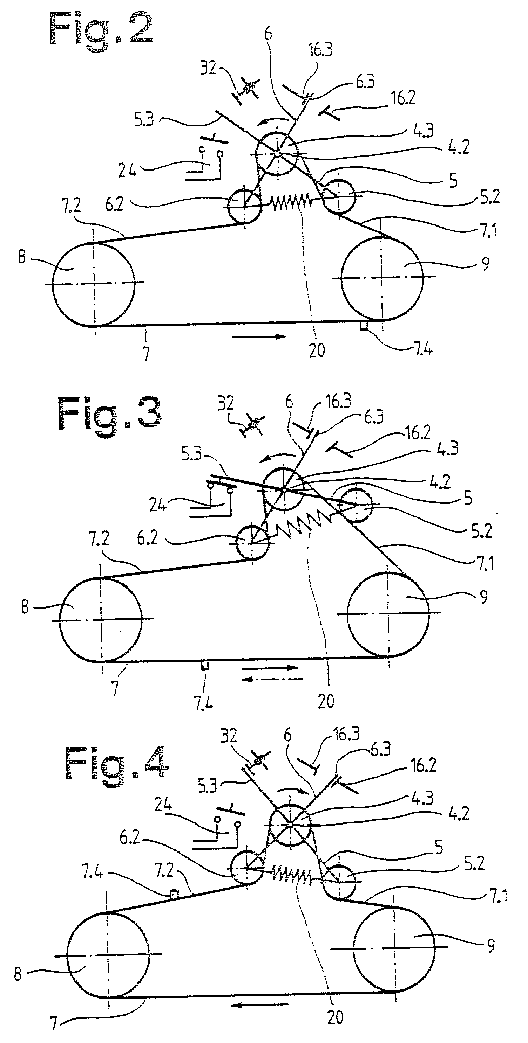

Die Schliessbewegung der Schiebetür erfolgt in umgekehrtem Sinne (siehe Fig. 2). Beim Anlaufen wird der Antriebstrum 7.1 des Zahnriemens 7 gespannt und der Rücklauftrum 7.2 des Zahnriemens 7 lose. Die an einem Hebelarm des Anschlaghebels 6 drehbar gelagerte Spannrolle 6.2 wird durch die zwischen dem Anschlaghebel 6 und dem Betätigungshebel 5 befestigte Feder 20 nach innen gezogen, bis der Anschlagnocken 6.3 des Anschlaghebels 6 an dem fest an der Kabine angeordneten Anschlag 16.3 ansteht ; dabei wird der lose Rücklauftrum 7.2 ebenfalls nach innen gezogen und gespannt. Die Kraft der Feder 20 und die Länge des Zahnriemens sind so gewählt, dass auch der gespannte Antriebstrum 7.1 des Zahnriemens 7 durch die an einem Hebelarm des Betätigungshebels 5 angeordnete Spannrolle 5.2 während der ganzen Schliessbewegung um einen gewissen Wert nach innen gezogen wird. Die Lage der Spannrolle 5.2 kann sich während der Tüschliessbewegung ändern, wenn ein Türflügel durch einen Fahrgast oder durch einen Gegenstand aufgehalten wird. Dabei wird auch der Antriebstrum 7.1 des Zahnriemens 7 blockiert und durch die vom Motor 1 angetriebene Zahnrolle 4.3 weiter gespannt, bis er eine gestreckte Tangente zwischen der Zahnrolle 4.3 und der Umlenkrolle 9 bildet (siehe Fig. 3). Die Spannrolle 5.2 wird nach aussen gedrückt, die Feder 20 auseinandergezogen, der Betätigungshebel 5 gleichzeitig im Gegenuhrzeigersinn geschwenkt und der Umsteuerkontakt 24 durch den Betätigungsnocken 5.3 betätigt. Die Schliessbewegung der Tür ändert sofort in eine Oeffnungsbewegung. Die Spannrolle 5.2, der Betätigungshebel 5 und die Feder 20 führen eine gleiche Bewegung auch am Ende der Schliessbewegung aus, wenn der Zahnriemen 7, nachdem das Anschlussgelenk 7.3 die Totpunktlage an der festen Umlenkrolle 9 überschritten hat, durch das Auflaufen des Mitnehmerbügels 10 auf den Schaft 9.2 der Drehachse 9.1 blockiert wird. Der Antriebstrum 7.1 des blockierten Zahnriemens 7 wird, wie oben beschrieben, durch den Motor 1 weiter gespannt, bis er zwischen der Treibrolle 4.3 und der festen Umlenkrolle 9 wiederum eine gemeinsame, gestreckte Tangente bildet. Der Betätigungsnocken 5.3 des im Gegenuhrzeigersinn geschwenkten Betätigungshebels 5 betätigt ebenfalls den Umsteuerkontakt 24. Da in dieser Stellung eine Reversierbewegung der Tür unerwünscht ist, wird der Umsteuerkontakt 24, kurz bevor der Zahnriemen 7 vom Mitnehmerbügel 10 blockiert wird, durch einen der beiden von der Steuerkurve 27 betätigten Kontakte 28 unwirksam gemacht.

Bei der Tür-Oeffnungsbewegung gemäss Fig. 4 wird der Rücklauftrum 7.2 des Zahnriemens 7 gespannt und der Antriebstrum 7.1 lose. Die am Anschlaghebel 6 angeordnete Spannrolle 6.2 wird vom Rücklauftrum 7.2 im Gegenuhrzeigersinn nach aussen gezogen, bis der Anschlagnocken 6.3 des Anschlaghebels 6 am zweiten, fest an der Kabine angeordneten Anschlag 16.2 ansteht. Der lose Antriebstrum 7.1 des Zahnriemens 7 wird durch die am Betätigungshebel 5 angeordnete, von der Feder 20 nach innen gezogene Spannrolle 5.2 gespannt. Durch den einstellbaren Anschlag 32 kann die tiefste Lage der Spannrolle 5.2 eingestellt und damit die von der Feder 20 auf die Spannrolle 6.2 des Anschlaghebels 6 und auf den Rücklauftrum 7.2 des Zahnriemens 7 ausgeübte Druckkraft beeinflusst werden. Die Tür-Oeffnungsbewegung wird, wie oben bei Fig. 1 beschrieben, unterbrochen, wenn der am Zahnriemen 7 befestigte Anschlag 7.4 die Kontaktfahne 25 verschiebt, wobei der Endkontakt 26 anspricht und der Motor 1 abgeschaltet wird.

## Patentansprüche

1. Türantrieb mit Einklemmsicherung für horizontal öffnende Türen von Aufzugskabinen mit einem von einem Motor (1) über ein Untersetzungsgetriebe (4) angetriebenes Antriebsmittel (7) mit mindestens einem an einer Tür angeordneten Türmitnehmer (10), wobei die Einklemmsicherung aus zwei mit Federn belasteten, an je einem zweiarmigen Rollenhebel (5, 6) angelenkten Spannrollen (5.2, 6.2) und aus mindestens einem Umschaltkontakt (24) besteht und eine durch das Blockieren der Tür betätigbare Reversierschaltvorrichtung aufweist, dadurch gekennzeichnet, dass das Antriebsmittel (7) ein über zwei Umlenkrollen (8, 9) horizontal umgelenktes bandförmiges Antriebsmittel (7) ist, dass der Türmitnehmer (10) am bandförmigen Antriebsmittel (7) angelenkt ist, dass die beiden zweiarmigen Rollenhebel (5, 6) auf einer gemeinsamen zur Aufzugskabine ortsfesten Achse (4.2) einer Treibrolle (4.3) für das bandförmige Antriebsmittel (7) drehbar gelagert sind und dass eine an den beiden rückseitigen Hebelarmen der Rollenhebel (5, 6) angeordnete, gemeinsame, verbindende Feder (20) die Spannrollen (5.2, 6.2) auf die Aussenseite des zwischen ihnen durch über die Treibrolle (4.3) geführten bandförmigen Antriebsmittels (7) drückt, wobei an der Aufzugskabine ein die tiefste Stellung der einen Spannrolle (5.2) blockierender, einstellbarer Anschlag (32) angeordnet ist.

2. Türantrieb nach Anspruch 1, dadurch gekennzeichnet, dass das bandförmige Antriebsmittel ein Zahnriemen (7) und die Treibrolle eine Zahnrolle (4.3) ist.

3. Türantrieb nach Anspruch 1, dadurch gekennzeichnet, dass der Motor nach Beendigung der Tür-Schliessbewegung in einer den Antriebstrum (7.1) des Zahnriemens (7) gespannt haltenden Einschaltstellung ist. .

## Claims

1. Door drive with anti-catching safety device for horizontally opening doors of lift cages with drive means (7) driven by a motor (1) through a step-down gear (4) and with at least one door-entraining member (10) arranged at a door, wherein the anticatching safety device consists of two tensioning rollers (5.2, 6.2), which are loaded by springs and each articulatedly connected at a respective two-armed roller lever (5, 6), and of at least one changeover contact (24) and displays a reversing switch device actuable by the blocking of the door, characterised thereby, that the drive means (7) is a belt-shaped drive means (7) deflected horizontally by way of two deflecting rollers (8, 9), that the door-entraining member (10) is articulatedly connected at the belt-shaped drive means (7), that both the two-armed roller levers (5, 6) are rotatably borne on a common axle (4.2), locally fixed relative to the lift cage, of a driving roller (4.3) for the belt-shaped drive means and that a common connecting spring (20) is arranged at both the rearward lever arms of the roller levers (5, 6) and presses the tensioning rollers (5.2, 6.2) onto the outside of the beltshaped drive means (7) guided through between them by way of the driving roller (4.3), wherein a settable abutment (32), which blocks the lowest setting of the one tensioning roller (5.2), is arranged at the lift cage.

2. Door drive according to claim 1, characterised thereby, that the belt-shaped drive means is a toothed belt (7) and the driving roller is a toothed roller (4.3).

3. Door drive according to claim 1, characterised thereby, that the motor after completion of the door-closing movement is in a switched-on setting holding the driving run (7.1) of the toothed belt (7) tensioned.

## Revendications

1. Entraînement de porte comportant un verrou de sécurité pour des portes de cabine d'ascenseur s'ouvrant horizontalement et ayant un moyen de transmission (7) entraîné par un moteur (1) par l'intermédiaire d'un démultiplicateur (4) et pourvu d'au moins un doigt d'entraînement (10) de porte disposé à une porte, le verrou de sécurité consistant en deux poulies de tension (5.2, 6.2) placées sous l'action de ressorts et articulées chacune à un levier à galet (5, 6) à deux bras ainsi qu'en au moins un contacteur d'inversion (24) et comportant un dispositif d'inversion capable d'être actionné par blocage de la porte, caractérisé en ce que le moyen de transmission (7) est un moyen de transmission en forme de bande (7) renvoyée horizontalement par l'intermédiaire de deux poulies de renvoi (8, 9), en ce que le doigt d'entraînement (10) de porte est articulé au moyen de transmission en forme de bande (7), en ce que les deux leviers à galet (5, 6) à deux bras sont montés à rotation sur un axe (4.2) commun à celui d'une poulie d'entraînement (4.3) du moyen de transmission en forme de bande (7) et disposé de façon fixe par rapport à la cabine d'ascenseur, et en ce qu'un ressort de liaison commun (20), disposé aux deux bras de levier arrières des leviers à galet (5, 6), appuie les poulies de tension (5.2, 6.2) sur le côté extérieur du moyen de transmission en forme de bande (7) guidé entre celles-ci sur la poulie d'entraînement (4.3), une butée réglable (32) étant fixée sur la cabine d'ascenseur et bloquant la position la plus basse de l'une des poulies de tension (5.2).

2. Entraînement de porte selon la revendication 1, caractérisé en ce que le moyen de transmission en forme de bande est une courroie dentée (7) et la poulie d'entraînement une poulie dentée (4.3).

3. Entraînement de porte selon la revendication 1, caractérisé en ce que le moteur (1) est dans une position de commutation maintenant tendu le brin menant (7.1) de la courroie dentée (7) lorsque le mouvement de fermeture de la porte est terminé.

# Fig.1

Fig. 2

Fig. 3

Fig. 4